# EUROPÄISCHE PATENTSCHRIFT

(11) **EP 0 779 180 B1**
(45) Veröffentlichungstag und Bekanntmachung des Hinweises auf die Patenterteilung: **04.10.2001**
(21) Anmeldenummer: 96116624.6
(22) Anmeldetag: 17.10.1996
(51) Int. Cl.: B60Q 1/32, B60Q 1/26

(54) **Seitenleuchte, als Seitenblinkleuchte und Seitenmarkierungsleuchte verwendbar**
Side light useful as direction indicator or side marker
Feu latéral utilisable comme indicateur de direction ou de côté

(30) Priorität: 13.12.1995 DE 19546436
(43) Veröffentlichungstag der Anmeldung: 18.06.1997
(73) Patentinhaber: Dr.Ing.h.c. F. Porsche Aktiengesellschaft, 70435 Stuttgart (DE)
(72) Erfinder: Hüfner, Werner, 73447 Oberkochen (DE); Brinkmann, Dirk, 75446 Wiernsheim (DE); Hiesl, Gerald, 71083 Herrenberg (DE); Porsche, Roman, 71229 Leonberg (DE)

(56) Entgegenhaltungen:
- EP-A- 0 536 435
- FR-A- 2 660 261
- US-A- 4 879 543

## Beschreibung

Die Erfindung betrifft eine Seitenleuchte für Fahrzeuge nach dem Oberbegriff des unabhängigen Anspruches, wie sie allgemein bekannt ist. Bei der aus der US 4,879,543 bekannten Anordnung ist im Türbereich eines Fahrzeuges eine Seitenleuchte im Außenbereich angebracht.

Für die Verkehrssicherheit von Fahrzeugen ist es notwendig, daß die Fahrtrichtungssignale des Fahrzeuges möglichst von jedem Standpunkt in bezug auf das Fahrzeug zu sehen sind. Diesbezügliche technische Vorschriften schreiben beispielsweise vor, daß die vorderen Blinkleuchten in einem Winkel von mindestens 5° zur Fahrzeuglängsachse entgegen der Fahrtrichtung sichtbar sein müssen.

Andererseits ist es aus aerodynamischen Gründen üblich geworden, den Bugbereich von Fahrzeugen mit einem Einzug zu versehen. Diese bedeutet, daß die Außenhaut des Fahrzeuges, in Fahrtrichtung gesehen, zur Fahrzeuglängsachse hin geneigt ist. Bei einer derartigen Gestaltung der Außenhaut ist es mit einer konventionellen Blinkleuchte unmöglich, die oben genannten Anforderungen zu erfüllen. Um die Sichtbarkeit der vorderen Blinkleuchte nach hinten zu erhöhen, ist es allgemein bekannt, in der Abdeckscheibe der Blinkleuchte eine mit Reflektoren versehene Abstellung vorzusehen, mit deren Hilfe die Blinkleuchte einen Teil ihres Lichtes von einer Position außerhalb der Außenhaut her abstrahlen kann. Eine derartige Schaltung der Blinkleuchte ist jedoch aus aerodynamischen wie auch aus optischen Gründen nicht immer wünschenswert; zudem ergeben sich abhängig von der Neigung des Bugbereiches des Fahrzeuges auch Grenzen für deren Anwendung.

Es ist ferner bekannt, an einem im wesentlichen parallel zur Fahrzeuglängsrichtung oder an einem leicht entgegen der Fahrtrichtung geneigten Bereich der Fahrzeugaußenhaut eine separate Seitenblinkleuchte anzubringen. Diese Seitenblinkleuchten sind regelmäßig hinter dem Vorderrad angeordnet und ergänzen die vordere Blinkleuchte in der Weise, daß die oben genannten Anforderungen erfüllt werden.

In verschiedenen Ländern sind derartige Seitenblinkleuchten allerdings nicht zugelassen; stattdessen ist dort eine mit der Fahrzeugbeleuchtung dauernd leuchtende Seitenmarkierungsleuchte vorgeschrieben, die die seitliche Sichtbarkeit des Fahrzeuges erhöht. Seitenmarkierungsleuchten dürfen jedoch nur einen geringen Abstand zum vorderen Ende des Fahrzeuges aufweisen, um auch die Dimensionen des Fahrzeuges kenntlich zu machen.

Bei dieser Sachlage stellt sich nun das Problem, daß je nach Ländervariante des Fahrzeuges das Fahrzeug mit einer Seitenmarkierungsleuchte oder einer Seitenblinkleuchte zu bestücken ist. Für diese Teile sind jeweils Öffnungen in der Außenhaut des Fahrzeuges vorzusehen. Dies bedingt wiederum, daß entweder für die nicht genutzten Öffnungen Blindstopfen oder ähnliches vorzusehen sind oder daß die betroffenen Außenhautteile des Fahrzeuges länderspezifisch gefertigt werden müssen. Beides erhöht den logistischen Aufwand bei der Fertigung des Fahrzeuges in beträchtlichem Maße; darüber hinaus sind Blindstopfen in der Außenhaut des Fahrzeuges optisch wenig ansprechend.

Aufgabe der Erfindung ist es nun, gegenüber diesem Stand der Technik eine Seitenleuchte zu schaffen, die die oben genannten Anforderungen erfüllt und damit sowohl als Seitenblinkleuchte wie auch als Seitenmarkierungsleuchte verwendbar ist.

Diese Aufgabe wird erfindungsgemäß durch das Schaffen einer Seitenleuchte mit den merkmalen des Anspruchs 1 gelöst.

Weiten vorteilhafte Ausführungsformen sind in den Unteransprüchen angegeben.

Wird die Seitenleuchte außerdem im Bereich des Stoßes zweier Teile der Außenhaut, beispielsweise des den oberen Radhausausschnitt bildenden Kotflügels und des den vorderen unteren Radhausausschnitt bildenden Frontends, angeordnet, so wird der zusätzliche Nutzen erzielt, daß die in diesem Bereich besonders deutlich sichtbaren Abweichungen in der Paßform der beiden Teile durch die Seitenleuchte ausgeglichen werden können.

Zur Erhöhung der seitlichen Erkennbarkeit des Fahrzeuges bei Dunkelheit wie auch zur weiteren Erfüllung von gesetzlichen Vorschriften ist es außerdem möglich, einen Reflektor als Bestandteil der Seitenleuchte vorzusehen. Dieser kann als Teil einer Abdeckscheibe der Seitenleuchte ausgeführt sein.

Die Erfindung ist nachstehend anhand des in den Zeichnungen dargestellten Ausführungsbeispieles näher erläutert. Es zeigen:
- Fig. 1: eine Draufsicht auf ein Kraftfahrzeug mit der Darstellung von verschiedenen Blinkleuchten und ihrem Abstrahlverhalten,
- Fig. 2: einen horizontalen Schnitt durch eine erfindungsgemäße Seitenleuchte und
- Fig. 3: eine Seitenansicht der erfindungsgemäßen Seitenleuchte.

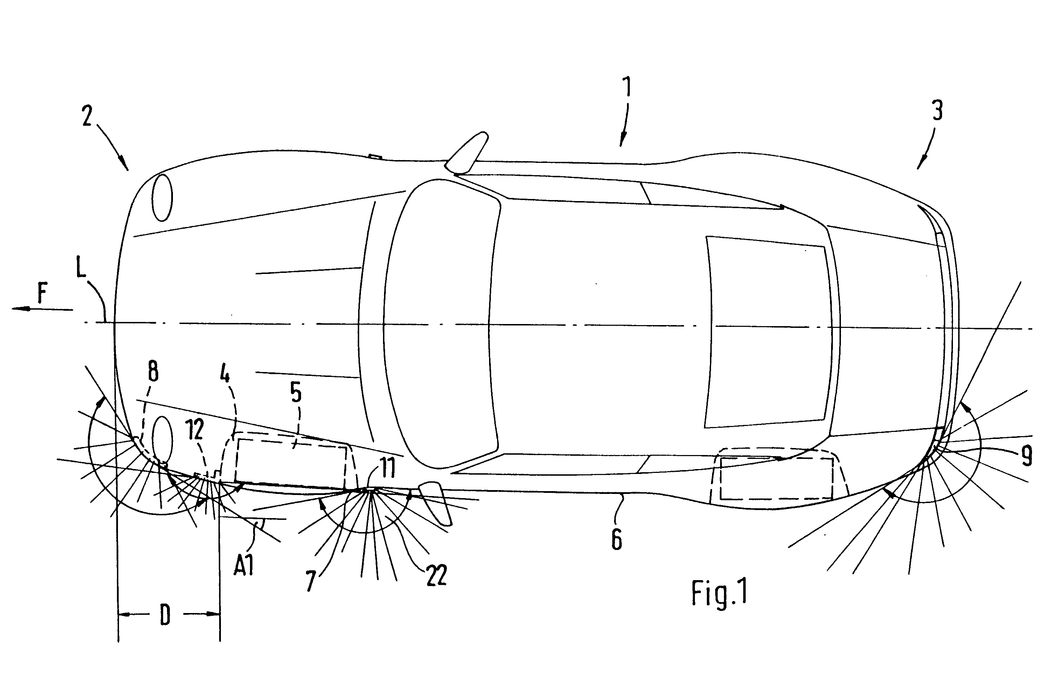

Das in Fig. 1 dargestellte Fahrzeug weist einen Bugbereich 2 sowie einen Heckbereich 3 auf. Der Bugbereich 2 des Fahrzeuges ist der Bereich, der sich vor einem vorderen Radhaus 4 eines Vorderrades 5 des Fahrzeuges 1 befindet. In einer Außenhaut 6 des Fahrzeuges ist das vordere Radhaus 4 durch einen Radhausausschnitt 7 gebildet. Die Fahrzeuglängsachse ist mit L, die Fahrtrichtung mit F bezeichnet. Zur Anzeige der Fahrtrichtung sind auf der linken Fahrzeugseite eine vordere Blinkleuchte 8 sowie eine hintere Blinkleute 9 vorgesehen. Für die andere Fahrzeugseite gilt sinngemäßes.

Der Bugbereich 2 des Fahrzeuges ist eingezogen, d.h. die Außenhaut 6 ist in diesem Bereich zur Fahrzeuglängsachse L in Fahrtrichtung gesehen hin geneigt so daß sich daß Fahrzeug in Fahrtrichtung verjüngt. Da die vordere Blinkleuchte 8 aus aerodynamischen wie auch aus stylistischen Gründen außennautbündig angeordnet ist, ist ihre Sichtbarkeit durch den Verlauf der Außenhaut begrenzt und in einem Abstrahlbereich 10 sichtbar. Durch die Form des Bugbereiches 2 ist die Sichtbarkeit nach hinten, d.h. entgegengesetzt der Fahrtrichtung F, eingeschränkt und der Winkel A1 zwischen der hinteren Begrenzung des Abstrahlbereiches 10 und der Fahrzeuglängsachse L beträgt im Ausführungsbeispiel ca. 25°.

Um die für die Verkehrssicherheit notwendige und auch gesetzlich vorgeschriebene Sichtbarkeit der Fahrtrichtungsanzeige nach hinten mit einem Abstrahlwinkel von höchstens 5° zu erreichen, ist daher üblicherweise eine Seitenblinkleuchte 11 vorgesehen, die hinter dem Vorderrad 5 an der Außenhaut 6 des Fahrzeuges angeordnet ist.

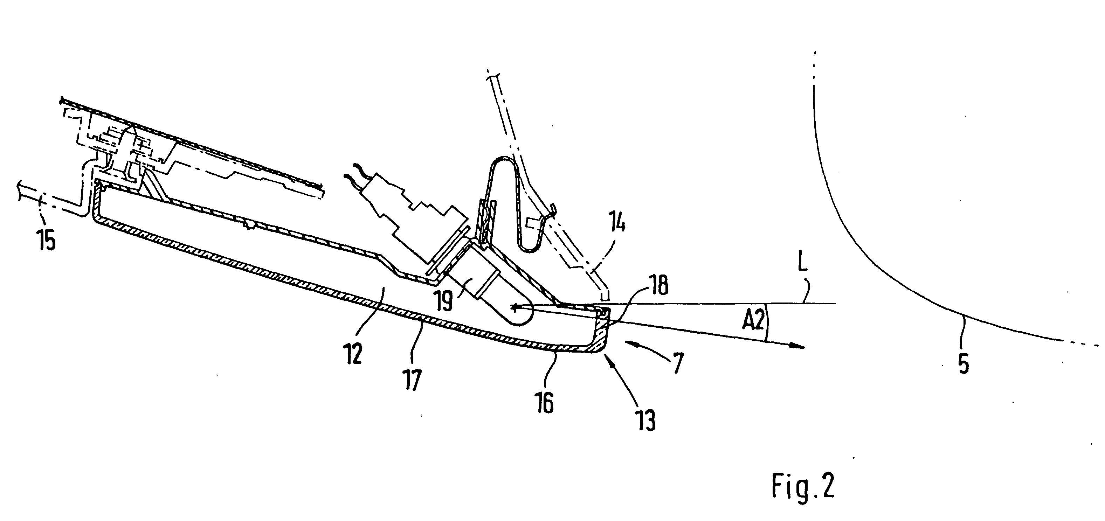

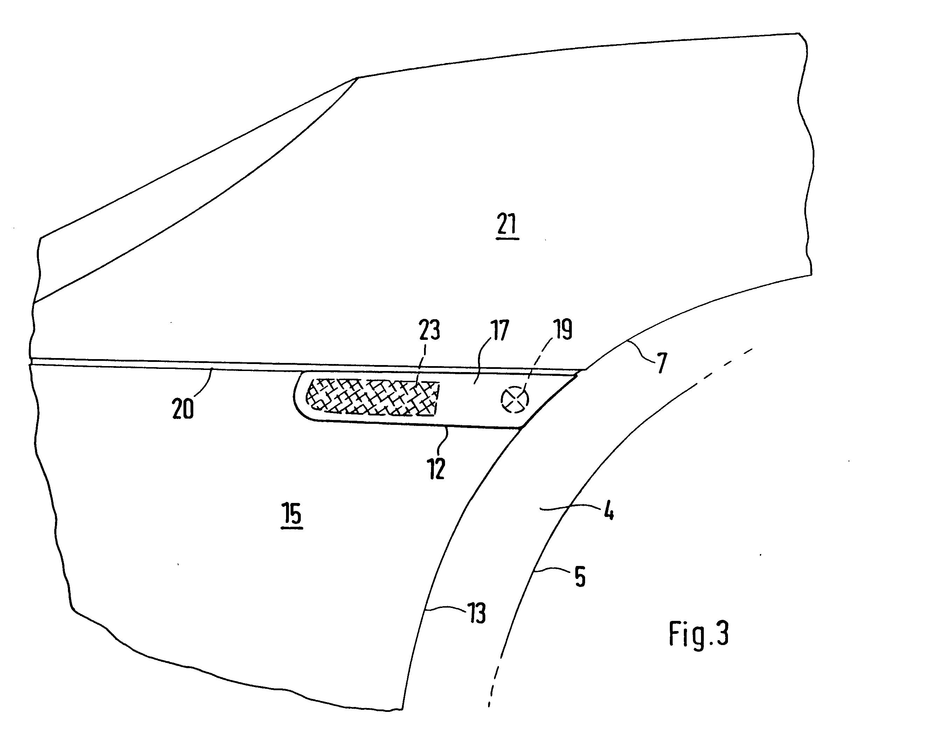

Erfinaungsgemäß ist anstelle dieser Seitenblinkleuchte 11 nun eine als Seitenblinkleuchte 12 eingesetzte Seitenleuchte so angeordnet, daß sie einen Teil des Radhausausschnittes 7 bildet (Fig. 2, 3). Sie erstreckt sich hierbei über eine Kante 13 des Radhausausschnittes 7 hinweg zwischen einer Radhausinnenschale 14 und einem Frontend 15, das einen Teil des Bereiches 2 bildet. Präzise ausgedrückt, erstreckt sich eine lichtdurchlässige Abdeckscheibe 16 der Seitenblinkleuchte 12 über die Kante 13 hinweg, so daß die Abdeckscheibe 16 einen ersten Teil 17 aufweist, der eine Fortsetzung des Bugbereiches 2 bis hin zur Kante 13 bildet, und einen zweiten Teil 18 aufweist, der sich von der Kante 13 weg zur Radhausinnenschale 14 erstreckt.

in der Seitenblinkleuchte 12 ist eine Glühbirne 19 so angeordnet, daß der Lichtstrahl, der aus der Seitenblinkleuchte 12 austritt und am stärksten entgegen der Fahrtrichtung F geneigt ist, einen Winkel A2 mit der Fahrzeuglängsrichtung einschließt, der kleiner als 5° ist. Hierzu erfolgt der Lichtaustritt durch den zweiten Teil 18 der Abdeckscheibe 16, der nicht ein Teil der Außenhaut 6, sondern ein Teil des Radhausausschnittes 7 ist.

Wie in Fig. 3 gezeigt, sitzt die Seitenblinkleuchte 12 auf einem Stoß 20 zwischen dem Frontend 15 und einem Kotflügel 21, der einen vorderen oberen Bereich des Radhausausschnittes 7 bildet. Das Frontend 15 und der Kotflügel 21 sind zwar konstruktiv aufeinander abgestimmt, jedoch ist es unvermeidbar, daß durch Fertigungstoleranzen die Maße im Bereich des Stoßes 20 nicht identisch sind. Derartige Toleranzen werden im Radhausausschnitt 7 besonders deutlich sichtbar, da hier Abweichungen beidseits der Kante 13 auftreten können. Zum Ausgleich dieser Toleranzen ist die Seitenblinkleuchte 12 als Teil der Kante 13 des Radhausausschnittes 7 zwischen dem Frontend 15 und dem Kotflügel 21 ausgebildet. Hierzu ist die Seitenblinkleuchte 12 federnd befestigt und stützt sich in nicht näher dargestellter Weise in ihrem oberen Bereich am Kotflügel 21 und in ihrem unteren Bereich am Frontend 15 ab. Damit schafft sie besonders im Bereich der Kante 13 einen Übergang zwischen dem Verlauf der Kante 13 im Bereich des Kotflügels 21 und dem Verlauf der Kante 13 im Bereicht des Frontends 15. Ebenso kann durch Einstellung der Position der Seitenblinkleuchte 12 in Richtung der Fahrzeuglängsachse L ein Toleranzausgleich für das Fraontend 15 und den Kotflügel 21 erreicht werden.

Soweit anstelle der Seitenblinkleuchte 12 eine Seitenmarkierungleuchte erforderlich ist, ist es für diese vorgeschrieben, daß deren Anbauort einen bestimmten Abstand vom vorderen Ende des Fahrzeuges 1 nicht überschreiten darf. Da der Anbauort der Seitenblinkleuchte 12 vor dem vorderen Rad 5 des Fahrzeuges 1 liegt und damit einen vergleichsweise geringen Abstand D vom vorderen Ende des Fahrzeuges aufweist, kann die Seitenblinkleuchte 12 in den Ländern, wo dies gefordert ist, durch eine geänderte Ansteuerung auch als Seitenmarkierungsleuchte verwendet werden. Unabhängig von der Ländervariante des Fahrzeuges 1 ist daher sowohl für die Ausführung als Seitenblinkleuchte, wie auch für die Ausführung als Seitenmarkierungsleuchte ein einziger Anbauort erforderlich und damit auch nur ein einziges Mal in der Außenhaut 6 einer entsprechenden Öffnung oder ähnliches vorzusehen.

Die gezeigte Seitenleuchte kann sowohl in ihrer Anwendung als Seitenblinkleuchte wie auch in ihrer Anwendung als Seitenmarkierungsleuchte mit einem Reflektor 23 kombiniert sein, der, wie in Fig. 3 dargestellt, im ersten Teil 17 der Abdeckscheibe 16 angeordnet sein kann.

## Patentansprüche

1. Seitenleuchte für ein Fahrzeug mit einer Außenhaut (6) und einem in der Außenhaut vorgesehenen Ausschnitt (7), wobei die Seitenleuchte eine lichtdurchlässige Abdeckscheibe (16) mit einem ersten Teil (17) und mit einem bezüglich dem ersten Teil (17) abgewinkelten zweiten Teil (18) umfaßt und daß die Seitenleuchte an einer Kante (13) des Ausschnittes (7) so angeordnet ist, daß der erste Teil (17) der Abdeckscheibe (16) eine Fortsetzung der Außenhaut bildet und daß der zweite Teil (18) der Abdeckscheibe (16) eine Fortsetzung der Kante (13) des Ausschnittes (7) bildet und daß ein Lichtaustritt durch den lichtdurchlässigen zweiten Teil (18) der Abdeckscheibe (16) hindurch erfolgen kann,
**dadurch gekennzeichnet, daß** der Ausschnitt (7) ein Radhausausschnitt ist.

2. Seitenleuchte nach Anspruch 1, **dadurch gekennzeichnet, daß** die Kante (13) diejenige Kante des Ausschnittes (7) ist, die zum nächstliegenden Ende des Fahrzeuges (1) zeigt.

3. Seitenleuchte nach einem der vorstehenden Ansprüche, **dadurch gekennzeichnet, daß** sie an der Kante (13) im Bereich eines Stoßes (20) zweier Teile (15, 21) der Außenhaut (6) angeordnet ist.

4. Seitenleuchte nach einem der vorstehenden Ansprüche, **dadurch gekennzeichnet, daß** ein Reflektor (23) Bestandteil der Seitenleuchte (12) ist.

## Claims

1. A side light for a vehicle with an outer skin (6) and an aperture (7) provided in the outer skin, wherein the side light comprises a translucent cover pane (16) with a first part (17) and a second part (18) angled with respect to the first part (17), and the side light is arranged on an edge (13) of the aperture (7) in such a way that the first part (17) of the cover pane (16) forms an extension of the outer skin and the second part (18) of the cover pane (16) forms an extension of the edge (13) of the aperture (7), and light can emerge through the translucent second part (18) of the cover pane (16), **characterized in that** the aperture (7) is an aperture in the wheel arch.

2. A side light according to Claim 1, **characterized in that** the edge (13) is that edge of the outer skin (7) directed towards the nearest end of the vehicle (1).

3. A side light according to one of the preceding Claims, **characterized in that** it is arranged on the edge (13) in the region of a gap (20) between two parts (15, 21) of the outer skin (6).

4. A side light according to one of the preceding Claims, **characterized in that** a reflector (23) is a component of the side light (12).

## Revendications

1. Feu latéral pour un véhicule comportant une enveloppe extérieure (6) et une découpe (7) prévue dans l'enveloppe extérieure, le feu latéral comprenant un capot vitré (16) transparent avec une première partie (17) et une deuxième partie (18) coudée par rapport à la première partie (17), et en ce que le feu latéral est disposé sur un bord (13) de la découpe (7) de manière que la première partie (17) du capot vitré (16) forme un prolongement de l'enveloppe extérieure, et en ce que la deuxième partie (18) du capot vitré (16) forme un prolongement du bord (13) de la découpe (7), et en ce que la lumière peut traverser la deuxième partie (18) transparente du capot vitré (16), **caractérisé en ce que** la découpe (17) est une découpe du logement de roue.

2. Feu latéral selon la revendication 1, **caractérisé en ce que** le bord (13) est le bord de la découpe (7) qui est dirigé vers l'extrémité la plus proche du véhicule (1).

3. Feu latéral selon une des revendications précédentes, **caractérisé en ce qu'**il est disposé sur le bord (13) dans la zone d'un joint (20) entre deux parties (15, 21) de l'enveloppe extérieure (6).

4. Feu latéral selon une des revendications précédentes, **caractérisé en ce qu'**un réflecteur (23) fait partie intégrante du feu latéral (12).
